# EUROPEAN PATENT SPECIFICATION

(11) **EP 4 169 984 B1**
(45) Date of publication and mention of the grant of the patent: **19.06.2024**
(21) Application number: 22201262.7
(22) Date of filing: 13.10.2022
(51) Int. Cl.: C08L 83/04

(54) **THERMALLY CONDUCTIVE SILICONE COMPOSITION**
WÄRMELEITFÄHIGE SILIKONZUSAMMENSETZUNG
COMPOSITION DE SILICONE THERMOCONDUCTRICE

(30) Priority: 19.10.2021 JP 2021171220
(43) Date of publication of application: 26.04.2023
(73) Proprietor: SHIN-ETSU CHEMICAL CO., LTD., Tokyo 1000005 (JP)
(72) Inventor: Toya, Wataru, Gunma (JP); Iwata, Mitsuhiro, Gunma (JP); Yamaguchi, Takahiro, Gunma (JP); Kitazawa, Keita, Gunma (JP)
(74) Representative: Sonnenhauser, Thomas Martin

(56) References cited:
- EP-B1- 3 575 363
- US-A1- 2018 022 977

## Description

### TECHNICAL FIELD

The present invention relates to a thermal conductive silicone composition.

### BACKGROUND ART

It is widely known that semiconductor devices generate heat in use, thereby lowering the performances thereof, and various heat dissipation techniques have been used as a means to solve this problem. Typical heat dissipation techniques include a technique involving disposing a cooling member (such as a heat sink) near a heat-generating part and bringing them into close contact to efficiently remove and dissipate heat from the cooling member. In this event, if there is a space between the heat-generating member and the cooling member, thermal conductivity is lowered because of the presence of air, which is poor in thermal conduction, so that the temperature of the heat-generating member cannot be reduced sufficiently. To prevent this phenomenon, heat dissipation materials with good thermal conductivity and followability to the surface of the member, such as heat-dissipating grease or heat-dissipating sheets, have been used.

In recent years, the amount of heat generation during the operation is further increasing for semiconductors of high-grade devices, such as CPUs for servers, IGBTs (Insulated Gate Bipolar Transistors) for driving vehicles, and the like. As the amount of heat generation increases, the heat dissipation performance required for heat-dissipating grease and heat-dissipating sheets has also increased, and heat dissipation materials using alumina (aluminum oxide), aluminum nitride, and the like as heat conductive fillers have been proposed (Patent Documents 1 and 2).

On the other hand, since silicon chips have become thinner in recent years, if alumina or aluminum nitride with high Mohs hardness is used as the heat conductive filler, the chips will wear out or crack. For this reason, thermal conductive silicone compositions with fillers of low Mohs hardness have been proposed (Patent Document 3). However, in the application to thin films having a thickness of 50 µm or less, the performance was insufficient.

2018/022977 A1 discloses a thermally conductive silicone composition comprising an organopolysiloxane with at least one terminal hydrolysable group and a kinematic viscosity 2 of 10-100,000 mm /s at 25 °C, a one-terminal-trifunctional hydrolyzable polysiloxane, aluminium powder of average particle diameter 7-16 µm, zinc oxide powder of average particle diameter 2 µm or less, and organohydrogenpolysiloxanes.

### CITATION LIST

### PATENT LITERATURE

Patent Document 1: JP 2017-210518 A
Patent Document 2: JP 2020-169231 A
Patent Document 3: JP 2020-111655 A

### SUMMARY OF INVENTION

### TECHNICAL PROBLEM

The present invention was accomplished in light of the circumstances described above, and an object of the present invention is to provide a thermal conductive silicone composition that has high thermal conductivity and compressibility to 50 um or less, and that does not damage silicon chips.

### SOLUTION TO PROBLEM

In order to achieve the above object, the present invention provides a thermal conductive silicone composition comprising:
(A) an organopolysiloxane having a kinematic viscosity at 25°C of 10 to 100,000 mm²/s;
(B) a hydrolysable organopolysiloxane containing an alkoxysilyl group;
(C) a heat conductive filler having an average particle size of 4 um or more and 30 µm or less and containing a coarse particle with a particle size of 45 µm or more determined by a laser diffraction particle size distribution method in an amount of 0.5 mass% or less in the entire component (C); and
(D) an irregular-shaped zinc oxide particle having an average particle size of 0.01 µm or more and 2 µm or less, wherein
   the component (C) comprises an irregular-shaped zinc oxide particle which is contained in an amount of 40 to 90 mass% in the entire composition,
   an amount of the component (D) is 1 to 50 mass% in the entire composition,
   a thermal conductivity of the thermal conductive silicone composition determined by a hot disc method in accordance with ISO 22007-2 is 2.0 W/m·K or more and less than 7.0 W/m·K, and
   a viscosity measured by a spiral viscometer at 25°C and at a rotation number of 10 rpm is 5 to 800 Pa·s.

The thermal conductive silicone composition has high thermal conductivity and compressibility to 50 µm or less, and can suppress damages to silicon chips.

Further, in the thermal conductive silicone composition of the present invention, the component (A) is an organopolysiloxane having one or more aliphatic unsaturated hydrocarbon groups bonded to a silicon atom within one molecule, and
the composition further comprises:
(E) an organohydrogenpolysiloxane having two or more hydrogen atoms bonded to a silicon atom within one molecule;
(F) a platinum metal catalyst; and
(G) a reaction inhibitor.

Such a thermal conductive silicone composition has higher thermal conductivity and compressibility to 50 µm or less, and can suppress damages to silicon chips.

The thermal conductive silicone composition described above preferably has a tracking resistance of 350 V or more determined by a tracking resistance test in accordance with JIS C 2134.

When the tracking resistance is 350 V or more, the electrical insulation performance of the thermal conductive silicone composition is further improved.

The thermal conductive silicone composition described above is preferably such that a complex elastic modulus G* at a distortion of 10% under conditions of a thickness of 2.0 mm, a temperature of 120°C, and an angular velocity of 1 rad/s is 10,000 Pa·s or less, and a ratio of a loss elastic modulus G"/storage elastic modulus G' is 8.0 or less.

With the viscoelastic properties within this range, pumping out of the silicone composition can be prevented when the base material expands and vibrates after the mounting.

The thermal conductive silicone composition described above is preferably such that, when the thermal conductive silicone composition with a thickness of 100 µm is pressurized at 25°C and 0.1 MPa for 60 minutes, the thickness of the pressurized silicone composition is 5 µm or more and 45 µm or less.

With such a thickness after the pressurization, there is no risk of friction in-between when the base material expands due to heat, and the thermal resistance does not become excessively large. This is optimum for a thermal conductive silicone composition.

### ADVANTAGEOUS EFFECTS OF INVENTION

The present invention makes it possible to provide a silicone composition that has high heat dissipation performance due to its appropriate thickness and thermal conductivity in actual use, and that is less likely to damage silicone chips.

### DESCRIPTION OF EMBODIMENTS

As described above, there has been a demand for the development of a thermal conductive silicone composition that has high thermal conductivity and compressibility to 50 µm or less and that does not damage silicon chips.

The inventors of the present invention conducted extensive research to achieve the above object, and consequently found that a silicone composition containing an organopolysiloxane having a specific kinematic viscosity, a hydrolysable organopolysiloxane containing an alkoxysilyl group, and irregular-shaped zinc oxide particles having a specific particle size has high thermal conductivity and compressibility to 50 um or less, and can suppress breakage of a silicon chip. With this finding, the inventors completed the present invention.

More specifically, the present invention is a thermal conductive silicone composition comprising: (A) an organopolysiloxane having a kinematic viscosity at 25°C of 10 to 100,000 mm²/s; (B) a hydrolysable organopolysiloxane containing an alkoxysilyl group; (C) a heat conductive filler having an average particle size of 4 µm or more and 30 um or less and containing a coarse particle with a particle size of 45 µm or more determined by a laser diffraction particle size distribution method in an amount of 0.5 mass% or less in the entire component (C); and (D) an irregular-shaped zinc oxide particle having an average particle size of 0.01 um or more and 2 µm or less, where the component (C) comprises an irregular-shaped zinc oxide particle which is contained in an amount of 40 to 90 mass% in the entire composition, an amount of the component (D) is 1 to 50 mass% in the entire composition, a thermal conductivity of the thermal conductive silicone composition determined by a hot disc method in accordance with ISO 22007-2 is 2.0 W/m·K or more and less than 7.0 W/m·K, and a viscosity measured by a spiral viscometer at 25°C and at a rotation number of 10 rpm is 5 to 800 Pa-s.

The present invention is described below in detail; however, the present invention is not limited to the examples described below.

The present invention relates to a thermal conductive silicone composition having an excellent insulation property and low wear property.

The thermal conductive silicone composition of the present invention is characterized by comprising an organopolysiloxane having a specific kinematic viscosity as the component (A), a hydrolysable organopolysiloxane containing an alkoxysilyl group as the component (B), a heat conductive filler having a specific particle size as the component (C), and an irregular-shaped zinc oxide particle having an average particle size of 0.01 µm or more and 2 µm or less as the component (D). In addition, as described later, components other than these components may further be contained as necessary. Hereinbelow, each component is described.

### [Component (A)]

The component (A) is an organopolysiloxane having a kinematic viscosity at 25°C of 10 to 100,000 mm²/s , preferably 30 to 10,000 mm²/s, more preferably 100 to 8,000 mm²/s. If the kinematic viscosity of the organopolysiloxane is lower than the above lower limit, oil bleeding tends to occur when the organopolysiloxane is formed into a silicone composition. On the other hand, if the kinematic viscosity of the organopolysiloxane is greater than the above upper limit, the extensibility of the silicone composition may decrease. In the present invention, the kinematic viscosity of the organopolysiloxane refers to a value measured at 25°C using an Ostwald viscometer.

In the present invention, the organopolysiloxane may be any organopolysiloxane having the above kinematic viscosity, and previously-known organopolysiloxane may be used. The molecular structure of the organopolysiloxane is not particularly limited and may be linear, branched, cyclic, or the like. In particular, it is preferable to have a linear structure in which the main chain is composed of repeating diorganosiloxane units and both terminals of the molecular chain are blocked with triorganosiloxy groups. The organopolysiloxane may be one kind or in a combination of two or more kinds.

The organopolysiloxane may be represented by, for example, the following average composition formula (1).

R¹ₐSiO_{(4-a)/2} (1)

In the average composition formula (1), R¹ independently represents a saturated or unsaturated, unsubstituted or substituted monovalent hydrocarbon group having 1 to 18, preferably 1 to 14 carbon atoms. Examples of the monovalent hydrocarbon group include alkyl groups such as a methyl group, an ethyl group, a propyl group, a hexyl group, an octyl group, a decyl group, a dodecyl group, a tetradecyl group, a hexadecyl group, and an octadecyl group; cycloalkyl groups such as a cyclopentyl group and a cyclohexyl group; alkenyl groups such as a vinyl group and an allyl group; aryl groups such as a phenyl group and a tolyl group; aralkyl groups such as a 2-phenylethyl group and a 2-methyl-2-phenylethyl group; as well as these groups in which a part or all of the hydrogen atoms are substituted with a halogen atom such as fluorine, bromine, and chlorine, a cyano group or the like, for example, a 3,3,3-trifluoropropyl group, a 2-(perfluorobutyl) ethyl group, a 2-(perfluorooctyl) ethyl group, and a p-chlorophenyl group. Among them, a methyl group, a phenyl group and a vinyl group are preferable.

In the average composition formula (1) above, a is a number in the range of 1.8 to 2.2, in particular, in the range of 1.9 to 2.1. When a is within the above range, the silicone composition to be obtained may have a desirable viscosity.

The organopolysiloxane represented by the average composition formula (1) is preferably a linear organopolysiloxane represented by the following formula (2) .

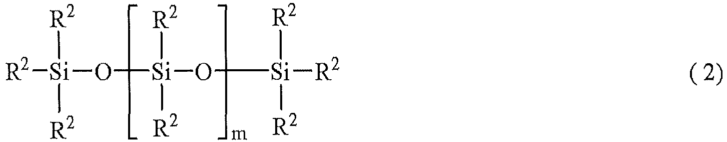

In the formula (2), R² independently represents a saturated or unsaturated, unsubstituted or substituted monovalent hydrocarbon group having 1 to 18, preferably 1 to 14 carbon atoms. Examples of the monovalent hydrocarbon group include the groups mentioned above as examples of R¹. Further, it is preferable that at least one R² is a vinyl group. m is a number with which the organopolysiloxane has a kinematic viscosity at 25°C of 10 to 100,000 mm²/s, preferably 30 to 10,000 mm²/s, more preferably 100 to 8,000 mm²/s.

The amount of the component (A) in the thermal conductive silicone composition is preferably 1 to 50 mass%, more preferably 3 to 10 mass% in total of the component (A) and the component (B), which is described later. With these contents of the components (A) and (B), it is possible to prevent a decrease of thermal resistance due to oil separation or pumping out, while maintaining desirable compressibility. Only one kind, or a combination of two or more kinds of the component (A) may be compounded. When two or more kinds of organopolysiloxanes are blended in combination, each of the organopolysiloxanes may have a kinematic viscosity at 25°C of 10 to 100,000 mm²/s, or the entire component (A) may have the above kinematic viscosity.

### [Component (B)]

The component (B) is a hydrolysable organopolysiloxane containing an alkoxysilyl group. The component (B) serves as a surface treatment agent for the component (C) as a heat conductive filler and the component (D), which are described later. Therefore, by adding the component (B), it is possible to improve the interaction between the component (A) and the components (C) and (D). As a result, the thermal conductive silicone composition can maintain its flowability even when containing a large amount of the component (C), i.e., the heat conductive filler and the component (D). Additionally, it is also possible to suppress a decrease in heat dissipation performance due to oil separation or pumping out over time. Examples of the component (B) include organopolysiloxanes represented by the following general formula (3). In particular, it is preferable to contain a trifunctional hydrolysable organopolysiloxane.

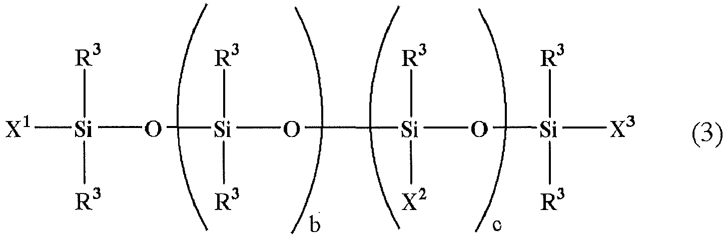

In the formula (3), R³ is independently an unsubstituted or substituted monovalent hydrocarbon group. X¹, X², and X³ may be the same or different, and each represents a group represented by R³ or -(R⁴)ₙ-SiR⁵_{d}(OR⁶)_{3-d}, given that at least one of X¹, X², and X³ is a group represented by -(R⁴)ₙ-SiR⁵_{d}(OR⁶)_{3-d}. R⁴ is an oxygen atom or an alkylene group having 1 to 4 carbon atoms, R⁵ is independently an unsubstituted or substituted monovalent hydrocarbon group containing no aliphatic unsaturated bonds, R⁶ is independently an alkyl group, an alkoxyalkyl group, an alkenyl group or an acyl group each having 1 to 4 carbon atoms, n is 0 or 1, d is an integer of 0 to 2. b and c satisfy 1≤b≤1,000 and 0≤c≤1,000, respectively.

In the above formula (3), R³ is independently unsubstituted or substituted monovalent hydrocarbon group having preferably 1 to 10, more preferably 1 to 6, further preferably 1 to 3 carbon atoms. Examples thereof include a linear alkyl group, a branched alkyl group, a cyclic alkyl group, an alkenyl group, an aryl group, an aralkyl group, a halogenated alkyl group, and the like. Examples of the linear alkyl group include a methyl group, an ethyl group, a propyl group, a hexyl group, and an octyl group. Examples of the branched alkyl group include an isopropyl group, an isobutyl group, a tert-butyl group, and a 2-ethylhexyl group. Examples of the cyclic alkyl group include a cyclopentyl group and a cyclohexyl group. Examples of the alkenyl group include a vinyl group and an allyl group. Examples of the aryl group include a phenyl group and a tolyl group. Examples of the aralkyl group include a 2-phenylethyl group and a 2-methyl-2-phenylethyl group. Examples of the halogenated alkyl group include a 3,3,3-trifluoropropyl group, a 2-(nonafluorobutyl)ethyl group, and a 2-(heptadecafluorooctyl)ethyl group. R³ is preferably a methyl group, a phenyl group or a vinyl group.

Examples of the alkylene group having 1 to 4 carbon atoms represented by R⁴ include a methylene group, an ethylene group, a propylene group, a butylene group, and the like. R⁵ is independently an unsubstituted or substituted monovalent hydrocarbon group that has preferably 1 to 10, more preferably 1 to 6, further preferably 1 to 3 carbon atoms, and that does not contain aliphatic unsaturated bonds. Examples thereof include alkyl groups such as a methyl group, an ethyl group, a propyl group, an isopropyl group, a butyl group, an isobutyl group, a tert-butyl group, a pentyl group, a neopentyl group, a hexyl group, a heptyl group, an octyl group, a nonyl group, a decyl group, and a dodecyl group; cycloalkyl groups such as a cyclopentyl group, a cyclohexyl group, and a cycloheptyl group; aryl groups such as a phenyl group, a tolyl group, a xylyl group, a naphthyl group, and a biphenylyl group; aralkyl groups such as a benzyl group, a phenylethyl group, a phenylpropyl group, and a methylbenzyl group; as well as these groups in which a part or all of the hydrogen atoms bonded to a carbon atom(s) are substituted with a halogen atom such as fluorine, chlorine, and bromine, a cyano group, or the like.

R⁶ is independently an alkyl group, an alkoxyalkyl group or an alkenyl group, or an acyl group each having 1 to 4 carbon atoms. Examples of the alkyl group represented by R⁶ include the same alkyl groups having 1 to 4 carbon atoms as those exemplified as R³, and the like. Examples of the alkoxyalkyl group include a methoxyethyl group, a methoxypropyl group, and the like. Examples of the alkenyl group include a vinyl group and an allyl group. Preferable Examples of the acyl group represented by R⁶ include those having 2 to 8 carbon atoms, such as an acetyl group, an octanoyl group, and the like. R⁶ is preferably an alkyl group, particularly preferably a methyl group or an ethyl group.

b and c are as defined above; however, it is preferable that b+c is 10 to 1,000, more preferably 10 to 300. n is 0 or 1, and d is an integer of 0 to 2, preferably 0. In addition, it is preferable that 1 to 6, particularly preferably 3 or 6 OR⁶ groups are present in the molecule. The order of bonding of the siloxane units in the parentheses is not particularly limited.

Preferable specific examples of the component (B) include, but are not limited to, the following.

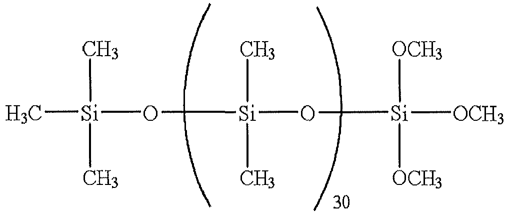

The amount of the component (B) relative to the component (A) is preferably in a range of: component (A):component (B) = 1:99 to 50:50 (mass ratio), and more preferably in a range of 5:95 to 20:80. Only one kind, or a combination of two or more kinds of the component (B) may be contained.

### [Component (C)]

The component (C) is a heat conductive filler having an average particle size of 4 µm or more and 30 µm or less, preferably 5 µm or more and 25 µm or less. If the average particle size of the component (C) is smaller than 4 um, the thermal conductivity of the thermal conductive silicone decreases. If the average particle size is larger than 30 µm, it becomes technically difficult to reduce the amount of coarse particles having a particle size of 45 µm or more contained in the component (C); as a result, the thermal conductive silicone composition cannot be made into a thin film and sufficient heat dissipation performance cannot be exhibited.

The average particle size is a cumulative average diameter D₅₀ (median diameter) in the particle size distribution on volumetric basis according to the laser diffraction and scattering method, and can be measured by, for example, Microtrac MT330OEX manufactured by Nikkiso Co., Ltd.

The content of coarse particles having a particle size of 45 um or more in the component (C) is 0.5 mass% or less, preferably 0 to 0.3 mass% of the entire component (C). If the content of the coarse particles is more than 0.5 mass%, the thickness of the thermal conductive silicone composition cannot be compressed to 50 µm or less. Consequently, sufficient heat dissipation performance cannot be exhibited. The particle size described above is a volume-based value according to the laser diffraction and scattering method.

The content of the coarse particles can be measured by, for example, the above-mentioned Microtrac MT330OEX manufactured by Nikkiso Co., Ltd.

The thermal conductive silicone composition of the present invention contains irregular-shaped zinc oxide particles as a heat conductive filler. Since zinc oxide has a Mohs hardness of 4 and is softer than silicon (having a Mohs hardness of 7) generally used for semiconductors, it does not wear the chip. The Mohs hardness referred to herein, which may also be referred to as an old Mohs hardness, is an index representing the hardness on a scale of 10, with the hardness of the hardest diamond being 10.

The thermal conductive silicone composition of the present invention contains, in the component (C), which is a heat conductive filler, irregular-shaped zinc oxide particles in an amount of 40 to 90 mass% based on the entire composition. If the content of the irregular-shaped zinc oxide particles in the component (C) is less than 40 mass%, the thermal conductivity of the thermal conductive silicone composition decreases, and if the content of the irregular-shaped zinc oxide particles in the component (C) is more than 90 mass%, the resulting thermal conductive silicone composition will not be uniform.

The heat conductive filler other than the irregular-shaped zinc oxide particles is not particularly limited, and examples thereof include hexagonal boron nitride (2), magnesium hydroxide (2.5), anhydrous magnesium carbonate (3.5), magnesium oxide (6), and fused silica (6), which are softer than silicon (7). Aluminum nitride (7), silicon nitride (8), aluminum oxide (9), and the like, which are as hard as or harder than silicon, may be contained in an amount causing no breakage of the silicon chip. The shapes thereof are also not particularly limited. In the above description, the numerical values in parentheses are Mohs hardness.

When two or more kinds of heat conductive fillers are contained in combination, it is sufficient that each heat conductive filler has an average particle size of 4 µm or more and 30 µm or less and that the content of coarse particles having a particle size of 45 µm or more, which is determined by the laser diffraction particle size distribution measurement method, is 0.5 mass% or less based on the entire component (C), and also, it is sufficient that the above conditions are satisfied for the component (C) as a whole.

### [Component (D)]

The component (D) is an irregular-shaped zinc oxide particle having an average particle size of 0.01 µm or more and 2 µm or less, preferably 0.05 um or more and 1.5 µm or less. By combining the component (D) with the heat conductive filler (component (C)) having a greater average particle size, the filling property can be improved. Since the component (D) itself also has thermal conduction, not only the filling property but also the thermal conduction can be improved. If the average particle size of the component (D) is less than 0.01 µm, the viscosity of the thermal conductive silicone composition significantly increases. If it falls above 2 µm, the resulting thermal conductive silicone composition will not be uniform.

The average particle size is a cumulative average diameter D₅₀ (median diameter) in the particle size distribution on volumetric basis according to the laser diffraction and scattering method, and can be measured by, for example, Microtrac MT330OEX manufactured by Nikkiso Co., Ltd.

The amount of the component (D) is 1 to 50 mass%, preferably 20 to 40 mass%, based on the entire thermal conductive silicone composition of the present invention. If the amount of the component (D) is less than 1 mass%, the resulting thermal conductive silicone composition will not be uniform, and if the amount of the component (D) is more than 50 mass%, the viscosity of the thermal conductive silicone composition significantly increases.

In the thermal conductive silicone composition of the present invention, if the component (A) is organosiloxane having one or more aliphatic unsaturated hydrocarbon groups in each molecule, it is possible to obtain an addition reaction type thermal conductive silicone composition by further adding the following components (E) to (G).

### [Component (E)]

The component (E) is an organohydrogenpolysiloxane having 2 or more, preferably 3 or more but less than 40 hydrogen atoms bonded to silicon atoms (SiH groups) in one molecule. The hydrogen atoms bonded to silicon atoms in the molecule undergo an addition reaction with aliphatic unsaturated hydrocarbon groups in the composition in the presence of a platinum group metal catalyst, which is described later, thereby forming a crosslinked structure.

There are no particular limitations on the molecular structure of the component (E), and the component (E) may have a linear, branched, or cyclic molecular structure, including those represented by the average composition formula shown below.

R⁷ₑH_{f}SiO_{(4-e-f)/2}

In the formula, R⁷ is independently an unsubstituted or substituted monovalent hydrocarbon group having 1 to 18, preferably 1 to 14 carbon atoms, excluding aliphatic unsaturated hydrocarbon groups. Examples of the monovalent hydrocarbon group include alkyl groups such as a methyl group, an ethyl group, a propyl group, a hexyl group, an octyl group, a decyl group, a dodecyl group, a tetradecyl group, a hexadecyl group, and an octadecyl group; cycloalkyl groups such as a cyclopentyl group and a cyclohexyl group; alkenyl groups such as a vinyl group and an allyl group; aryl groups such as a phenyl group and a tolyl group; aralkyl groups such as a 2-phenylethyl group and a 2-methyl-2-phenylethyl group; as well as these groups in which a part or all of the hydrogen atoms are substituted with a halogen atom such as fluorine, bromine, and chlorine, a cyano group or the like, for example, a 3,3,3-trifluoropropyl group, a 2-(perfluorobutyl) ethyl group, a 2-(perfluorooctyl) ethyl group, and a p-chlorophenyl group. R⁷ is particularly preferably a methyl group or a phenyl group.

e is 1.0 to 3.0, preferably 0.5 to 2.5, f is a positive number of 0.005 to 2.0, preferably 0.01 to 1.0, and e+f is a positive number satisfying a range of 0.5 to 3.0, preferably 0.8 to 2.5.

The component (E) is added in such an amount that the number of hydrogen atoms bonded to silicon atoms in the component (E) per aliphatic unsaturated hydrocarbon group bonded to the silicon atom in the component (A) is preferably 0.1 to 5.0, more preferably 0.1 to 1.0. This range ensures sufficient crosslinking and desirable handleability of the composition. Only one kind, or a combination of two or more kinds of the component (E) may be contained.

### [Component (F)]

The component (F) is a platinum group metal catalyst to be used to promote the hydrosilylation reaction between the aliphatic unsaturated hydrocarbon group, such as an alkenyl group, in the component (A) and the SiH group in the component (E). The platinum group metal catalyst may be a previously-known platinum group metal catalyst for use in addition reaction. Examples include platinum-based catalysts, palladium-based catalysts, and rhodium-based catalysts. Among them, platinum or platinum compounds, which can be easily obtained, are preferred. Examples thereof include elemental platinum, platinum black, chloroplatinic acid, a platinum-olefin complex, a platinum-alcohol complex, a platinum coordination compound, and the like.

The amount of the component (F) is preferably in a range of 1 to 2,000 ppm, more preferably 2 to 1,000 ppm in terms of the mass of platinum group metal atoms relative to the organopolysiloxane, i.e., the component (A). By setting the amount within this range, the addition reaction is advanced at an appropriate reaction rate.

Only one kind, or a combination of two or more kinds of the component (F) may be used.

### [Component (G)]

The component (G) is a reaction inhibitor that suppresses the progress of the hydrosilylation reaction at room temperature, and functions to extend shelf life and pot life. As the reaction inhibitor, a previously-known inhibitor used for addition curing silicone compositions may be used. Examples thereof include acetylene compounds such as acetylene alcohols (e.g. ethynylmethyldecylcarbinol, 1-ethynyl-1-cyclohexanol, and 3,5-dimethyl-1-hexyn-3-ol); various nitrogen compounds such as tributylamine, tetramethylethylenediamine, benzotriazole, and oxime compounds; organophosphorus compounds such as triphenylphosphine; organochlorine compounds; and the like.

### [Other Components]

The thermal conductive silicone composition of the present invention may contain organo(poly)siloxane having no reactivity, such as methylpolysiloxane, for the purpose of adjusting the elastic modulus and the viscosity. In addition, in order to prevent deterioration of the silicone composition, a known antioxidant such as 2,6-di-t-butyl-4-methylphenol may be added as necessary. Further, a dye, a pigment, a flame retardant, an antisettling agent, a thixotropy improver, or the like can be added as necessary.

### [Thermal Conductive Silicone Composition]

The thermal conductivity of the thermal conductive silicone composition of the present invention according to the hot disc method in accordance with ISO 22007-2 is 2.0 W/m·K or more and less than 7.0 W/m-K. As described later, the thermal conductivity may be measured by wrapping the thermal conductive silicone composition with kitchen wrap into a drawstring-pouch-like form to prepare a test piece, and measuring the test piece at 25°C using TPA-501 manufactured by Kyoto Electronics Industry Co.,Ltd.

The viscosity of the thermal conductive silicone composition of the present invention measured by a spiral viscometer at 25°C and at a rotation number of 10 rpm is 5 to 800 Pa·s, preferably 10 to 500 Pa·s. If the viscosity is less than 5 Pa·s, workability may be deteriorated, for example, it may be difficult to keep its shape. Further, if the viscosity exceeds 800 Pa·s also, workability may be deteriorated, for example, there may be a difficulty in discharging. The viscosity may be adjusted by the proportions of the above-described components. In the present invention, the viscosity (absolute viscosity) is a value measured at a rotation number of 10 rpm at 25°C using a spiral viscometer.

The thermal conductive silicone composition of the present invention preferably has a tracking resistance of 350 V or more determined by a tracking resistance test in accordance with JIS C 2134.

The viscoelastic properties of the thermal conductive silicone composition of the present invention is preferably such that a complex elastic modulus G* at a distortion of 10% under conditions of a thickness of 2.0 mm, a temperature of 120°C, and an angular velocity of 1 rad/s is 10,000 Pa·s or less, and a ratio of a loss elastic modulus G"/storage elastic modulus G' is 8.0 or less. With the viscoelastic properties within this range, pumping out of the silicone composition can be prevented when the base material expands and vibrates after the mounting. As described later, the viscoelastic properties may be measured, using a viscoelastometer, by applying the thermal conductive silicone composition into a thickness of 2.0 mm between two predetermined parallel plates, heating the plates to increase the temperature from 25°C at a rate of 5°C/min, keeping the plates at 120°C for 10 minutes, and then shearing the plates at an angular velocity of 1 rad/s while increasing the strain, and then measuring the storage elastic modulus G', loss elastic modulus G", and complex elastic modulus G*.

The thermal conductive silicone composition of the present invention has desirable compressibility. When the thermal conductive silicone composition having a thickness of 100 um is pressurized at 25°C and 0.1 MPa for 60 minutes, the resulting thickness is preferably 5 µm or more and 45 µm or less, more preferably 10 µm or more and 32 µm or less. With such a thickness, there is no risk of friction in-between when the base materials expand due to heat, and the thermal resistance does not become excessively large. This is optimum for a thermal conductive material. As described later, the thickness after the pressurization may be measured by sandwiching the 100 µm-thick thermal conductive silicone composition between two predetermined circular aluminum plates followed by pressurization at 25°C and at 0. 1 MPa for 60 minutes, and then measuring the thickness of the resulting test piece using a micrometer while subtracting the thickness of the aluminum plates, thereby determining the thickness of the composition after the pressurization.

Since the thermal conductive silicone composition of the present invention contains zinc oxide having a low Mohs hardness as a filler, it is an optimum thermal conductive silicone composition. When the thermal conductive silicone composition rubbed against a silicon chip, it does not wear the silicon chip. The method of the abrasion test may be performed, as in the scratch test for silicon chips described later, by using a test piece obtained from steps of sandwiching the thermal conductive silicone composition between two predetermined silicon wafers and pressurizing it at 25°C and at 0. 1 MPa for 60 minutes, where the two silicon wafers facing each other via the thermal conductive silicone composition are manually rubbed 100 times at a rate of 1 time/second, the wafers are washed with a toluene solution, and then the washed surface is observed with an optical microscope.

The thermal conductive silicone composition of the present invention can be suitably used by being interposed between a cooling member and a heat-generating member including an electronic component such as an LSI or the like to transfer heat from the heat-generating member to the cooling member, thereby dissipating heat, and can be used in the same manner as previously-known thermal conductive silicone greases.

### [Method for Producing Thermal Conductive Silicone Composition]

The method for producing the thermal conductive silicone composition of the present invention is described below; however, the production of the thermal conductive silicone composition of the present invention is not limited to these methods.

The production of the thermal conductive silicone composition of the present invention may be performed in accordance with the previously-known methods for producing thermal conductive silicone compositions, and is not particularly limited. For example, the thermal conductive silicone composition of the present invention may be obtained by mixing the components (A) to (D) and, as necessary, the components (E), (F), (G), as well as other optional components. The mixing device is not particularly limited, and various mixers such as Trimix, Twinmix, Planetary Mixer (all registered trademarks of Inoue MFG., Inc.), Ultramixer (registered trademark of Mizuho Industrial Co., Ltd.) or Hivis Disper Mix (registered trademark of Tokushu Kika Kogyo Co., Ltd.), and the like may be used. In addition, a three-roll finishing process or the like may be performed to break up the aggregation of irregular-shaped zinc oxide particles of the component (C) and the component (D), which are heat conductive fillers.

When the component (A) is an organopolysiloxane having one or more aliphatic unsaturated hydrocarbon groups bonded to silicon atom in one molecule, and when using the components (E), (F), and (G), it is preferable to mix them at a temperature of 100°C or higher for 30 minutes or longer, so that the components (A) and (E) are sufficiently cross-linked by a hydrosilylation reaction, thereby producing a thermal conductive silicone composition having appropriate viscosity.

### EXAMPLES

The present invention is more specifically described below with reference to Examples and Comparative Examples. However, the present invention is not limited to these Examples. In the following, the kinematic viscosity is a value measured at 25°C by an Ostwald viscometer (manufactured by Sibata Scientific Technology Ltd.).

The components used herein are as follows.

### [Component (A)]

A-1: Dimethylpolysiloxane with both terminals blocked with dimethylvinylsilyl groups, having a kinematic viscosity at 25°C of 600 mm²/s

### [Component (B)]

B-1: Hydrolysable organopolysiloxane represented by the formula below;

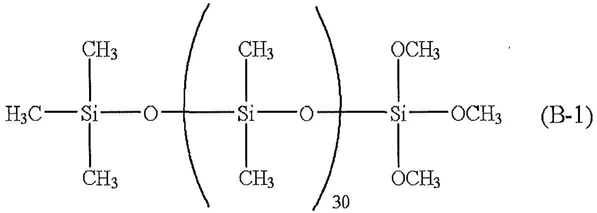

### [Component (C)]

C-1: Irregular-shaped zinc oxide powder with D₅₀ of 5.0 µm (Mohs hardness: 4, coarse particles of 45 um or more: less than 0.1 mass%)
C-2: Irregular-shaped zinc oxide powder with D₅₀ of 11.0 um (Mohs hardness: 4, coarse particles of 45 µm or more: less than 0.1 mass%)
C-3: Irregular-shaped zinc oxide powder with D₅₀ of 21.0 µm (Mohs hardness: 4, coarse particles of 45 µm or more: 0.4 mass%)
C-4: Spherical zinc oxide powder with D₅₀ of 20.0 µm (Mohs hardness: 4, coarse particles of 45 um or more: 1.9 mass%)
C-5: Polyhedral alumina powder with D₅₀ of 3.5 um (Mohs hardness: 9, coarse particles of 45 um or more: less than 0.1 mass%)

### [Component (D)]

D-1: Irregular-shaped zinc oxide powder with D₅₀ of 1.3 µm (Mohs hardness: 4)
D-2: Irregular-shaped zinc oxide powder with D₅₀ of 0.4 µm (Mohs hardness: 4)
D-3: Irregular-shaped aluminum nitride with D₅₀ of 0.7 um (Mohs hardness: 8)
D-4: Irregular-shaped alumina with D₅₀ of 1.4 µm (Mohs hardness: 9)

### [Component (E)]

E-1: Organohydrogensiloxane with both terminals blocked with trimethylsilyl groups, having a kinematic viscosity at 25°C of 100 mm²/s and SiH group content of 0.0055 mol/g

### [Component (F)]

F-1: Solution of platinum-divinyltetramethyldisiloxane complex dissolved in the same dimethylpolysiloxane as A-1 (platinum atom content: 1 mass%)

### [Component (G)]

G-1: Ethynylcyclohexanol

### [Examples 1-6, Comparative Examples 1-6]

### <Preparation of Thermal Conductive Silicone Composition>

Silicone compositions were prepared by blending the components (A) to (G) above according to the formulations shown in Tables 1 and 2 below using the method shown in the following Preparation Example.

### (Preparation Example)

The components (A) to (G) were placed in a 5-liter Planetary Mixer (manufactured by Inoue MFG., Inc.) and mixed at 150°C for 3 hours. The mixture was then cooled to 25°C to prepare a silicone composition.

The viscosity, thermal conductivity, thickness, viscoelasticity, silicon chip scratching, and tracking resistance of each composition obtained by the above method were evaluated according to the following methods. Tables 1 and 2 show the results.

### <Evaluation>

### [Viscosity]

The absolute viscosity of the thermal conductive silicone composition was measured using a spiral viscometer (Type PC-1T, Rotor A: manufactured by Malcom corporation) at 25°C, a rotation number of 10 rpm, and a shear rate of 6[1/s].

### [Thermal Conductivity]

The thermal conductive silicone composition was wrapped with kitchen wrap into a drawstring-pouch-like form to prepare a test piece, and the thermal conductivity of the test piece was measured at 25°C using TPA-501 manufactured by Kyoto Electronics Industry Co.,Ltd.

### [Thickness]

A test piece was prepared by sandwiching a thermal conductive silicone composition having a thickness of 100 µm between two circular aluminum plates having a diameter of 12.6 mm and a thickness of 1 mm, followed by pressurization at 25°C and at 0.1 MPa for 60 minutes. The thickness of the test piece was measured using a micrometer (manufactured by Mitutoyo Corporation) and the thickness of the aluminum plates was subtracted from the measured value, thereby determining the thickness of the composition after the pressurization.

### [Viscoelasticity]

A thermal conductive silicone composition was applied with a thickness of 2.0 mm between two parallel plates having a diameter of 2.5 cm. After the temperature of the plates to which the thermal conductive silicone composition was applied was increased from 25°C at a rate of 5°C/min, the plates were kept at 120°C for 10 minutes, and then the resulting plates were sheared at an angular velocity of 1.0 rad/s while increasing the strain, and the storage elastic modulus G', loss elastic modulus G", and complex elastic modulus G* were measured. The measurements were performed using a viscoelasticity measurement device (Type ARES-G2, manufactured by TA Instruments). The values of complex elastic modulus G*, loss elastic modulus G"/storage elastic modulus G' in the tables are the values at distortion of 10%.

### [Silicon Chip Scratch Test]

A test piece was prepared by sandwiching a thermal conductive silicone composition having a thickness of 100 um between two 10 mm square silicon wafers, followed by pressurization at 25°C and 0.1 MPa for 60 minutes. The two silicon wafers facing each other via the thermal conductive silicone composition were manually rubbed 100 times at a rate of 1 time/second, the wafers were washed with a toluene solution, and then the washed surface of the wafers was observed with an optical microscope. If there were no scratches, it was evaluated as "good"; if scratches were observed, it was evaluated as "poor".

### [Tracking Resistance Test]

A test piece was prepared by applying the composition with a thickness of 3 mm at 25°C and 50RH% into a 1.3 cm square. Using a YST-112 tester manufactured by Yamayoshikenki.com, the both ends of the test piece was sandwiched with electrodes, and a 0.1% aqueous ammonium chloride solution was added dropwise while applying a voltage of 350 V. After addition of 50 drops, if the test piece was not broken, it was evaluated as "good"; if the test piece was broken, it was evaluated as "poor". The above experiment was performed in accordance with JIS C 2134.

**[Table 1]**

| | | Example 1 | Example 2 | Example 3 | Example 4 | Example 5 | Example 6 |
|---|---|---|---|---|---|---|---|
| Compositio n (part by mass) | A-1 | 10 | 15 | 10 | 10 | 10 | 10 |
| | B-1 | 100 | 90 | 100 | 100 | 100 | 100 |
| | C-1 | 1000 | 680 | 400 | 680 | 680 | 960 |
| | C-2 | 0 | 680 | 400 | 0 | 680 | 960 |
| | C-3 | 0 | 0 | 0 | 680 | 0 | 0 |
| | C-4 | 0 | 0 | 0 | 0 | 0 | 0 |
| | C-5 | 0 | 0 | 0 | 0 | 0 | 0 |
| | D-1 | 250 | 340 | 810 | 340 | 0 | 480 |
| | D-2 | 0 | 0 | 0 | 0 | 340 | 0 |
| | D-3 | 0 | 0 | 0 | 0 | 0 | 0 |
| | D-4 | 0 | 0 | 0 | 0 | 0 | 0 |
| | Mass Fraction of (C) Irregular-Shaped Zinc Oxide | 74% | 75% | 47% | 75% | 75% | 76% |
| | Mass Fraction of Component (D) | 180 | 19% | 47% | 19% | 19% | 19% |
| | E-1 | 0.14 | 0.42 | 0.42 | 0.42 | 0.42 | 0.14 |
| | F-1 | 0.2 | 0.2 | 0.2 | 0.2 | 0.2 | 0.2 |
| | G-1 | 0.05 | 0.05 | 0.05 | 0.05 | 0.05 | 0.05 |
| Evaluation Result | viscosity (Pa·s) | 200 | 250 | 180 | 250 | 400 | 760 |
| | Thermal Conductivi ty (W/m·K) | 2.5 | 4.7 | 3.5 | 5.2 | 4.4 | 6.9 |
| | Thickness (µm) | 9.0 | 27.0 | 26.0 | 40.0 | 28.0 | 40.0 |
| | G"/G' | 1.4 | 5.0 | 2.6 | 1.9 | 3.0 | 7.9 |
| | G* (Pa·s) | 1,900 | 3,000 | 2,600 | 2,500 | 5,200 | 9,800 |
| | Silicon Chip Scratch Test | good | good | good | good | good | good |
| | Tracking Resistance Test | good | good | good | good | good | good |

**[Table 2]**

| | | Com. Example 1 | Com. Example 2 | Com. Example 3 | Com. Example 4 | Com. Example 5 | Com. Example 6 |
|---|---|---|---|---|---|---|---|
| Composition (part by mass) | A-1 | 10 | 15 | 10 | 15 | 15 | 30 |
| | B-1 | 100 | 90 | 100 | 90 | 90 | 70 |
| | C-1 | 0 | 680 | 0 | 680 | 680 | 610 |
| | C-2 | 0 | 0 | 0 | 680 | 680 | 610 |
| | C-3 | 0 | 0 | 0 | 0 | 0 | 0 |
| | C-4 | 0 | 680 | 0 | 0 | 0 | 0 |
| | C-5 | 0 | 0 | 1230 | 0 | 0 | 0 |
| | D-1 | 500 | 340 | 530 | 0 | 0 | 310 |
| | D-2 | 0 | 0 | 0 | 0 | 0 | 0 |
| | D-3 | 0 | 0 | 0 | 240 | 0 | 0 |
| | D-4 | 0 | 0 | 0 | 0 | 160 | 0 |
| | Mass Fraction of (C) Irregular-Shaped Zinc Oxide | 0% | 38% | 0% | 80% | 84% | 75% |
| | Mass Fraction of Component (D) | 82% | 19% | 28% | 140 | 10% | 19% |
| | E-1 | 0.14 | 0.42 | 0.14 | 0.42 | 0.42 | 0.84 |
| | F-1 | 0.2 | 0.2 | 0.2 | 0.2 | 0.2 | 0.2 |
| | G-1 | 0.05 | 0.05 | 0.05 | 0.05 | 0.05 | 0.05 |
| Evaluation Result | Viscosity (Pa·s) | 90 | 250 | 400 | 140 | 160 | 1,180 |
| | Thermal Conductivity (W/m·K) | 1.3 | 5.7 | 3.4 | 4 | 4.2 | 4.5 |
| | Thickness (µm) | 2.7 | 80 | 10 | 27 | 27 | 90 |
| | G"/G' | 6 | 2 | 5.4 | 4.8 | 4.7 | 8.9 |
| | G* (Pa·s) | 900 | 2,000 | 3,900 | 2,700 | 2,600 | 12,400 |
| | Silicon Chip Scratch Test | poor | good | poor | poor | poor | poor |
| | Tracking Resistance Test | good | good | good | good | good | good |

| | | | | | | | |
|---|---|---|---|---|---|---|---|
| Com. Example = Comparative Example | | | | | | | |

In Tables 1 and 2 above, "Mass Fraction of Component (D)" refers to the mass fraction of the irregular-shaped zinc oxide particles contained in the heat conductive filler of the component (C) relative to the entire composition.

The results shown in Tables 1 and 2 reveal that the thermal conductive silicone compositions of Examples 1 to 6 that meet the requirements of the present invention have high thermal conductivity and desirable compressibility, and suppress damages to the silicon chips.

On the other hand, Comparative Example 1, which does not contain the component (C) of the present invention, had insufficient thermal conductivity and the silicon chips were damaged. Further, Comparative Example 2 using a composition in which the content of coarse particles of 45 µm or more in the component (C) was larger than the range of the present invention had a thickness of 80 um, and the heat dissipation performance was insufficient. Furthermore, in Comparative Example 3 using alumina with high Mohs hardness instead of the component (C) of the present invention and Comparative Examples 4 and 5 using alumina or aluminum nitride with high Mohs hardness instead of the component (D) of the present invention, the silicon chips were damaged. In Comparative Example 6 using a composition with a viscosity greater than 800 Pa·s, the composition could not follow the displacement of the chip during the scratch test and fell off, resulting in damage to the silicon chip.

It should be noted that the present invention is not limited to the above-described embodiments. The embodiments are just examples, and any examples that substantially have the same feature and demonstrate the same functions and effects as those in the technical concept disclosed in claims of the present invention are included in the technical scope of the present invention.

## Claims

1. A thermal conductive silicone composition comprising:
(A) an organopolysiloxane having a kinematic viscosity at 25°C determined in accordance with the method outlined in the description of 10 to 100,000 mm²/s;
(B) a hydrolysable organopolysiloxane containing an alkoxysilyl group;
(C) a heat conductive filler having an average particle size of 4 µm or more and 30 um or less and containing a coarse particle with a particle size of 45 µm or more determined by a laser diffraction particle size distribution method in an amount of 0.5 mass% or less in the entire component (C); and
(D) an irregular-shaped zinc oxide particle having an average particle size of 0.01 um or more and 2 um or less, wherein
the component (C) comprises an irregular-shaped zinc oxide particle which is contained in an amount of 40 to 90 mass% in the entire composition,
an amount of the component (D) is 1 to 50 mass% in the entire composition,
a thermal conductivity of the thermal conductive silicone composition determined by a hot disc method in accordance with ISO 22007-2 is 2.0 W/m·K or more and less than 7.0 W/m-K, and
a viscosity measured by a spiral viscometer at 25°C and at a rotation number of 10 rpm is 5 to 800 Pa·s.

2. The thermal conductive silicone composition according to claim 1, wherein
the component (A) is an organopolysiloxane having one or more aliphatic unsaturated hydrocarbon group bonded to a silicon atom within one molecule, and
the composition further comprises:
(E) an organohydrogenpolysiloxane having two or more hydrogen atoms bonded to a silicon atom within one molecule;
(F) a platinum metal catalyst; and
(G) a reaction inhibitor.

3. The thermal conductive silicone composition according to claim 1 or 2, having a tracking resistance of 350 V or more determined by a tracking resistance test in accordance with JIS C 2134.

4. The thermal conductive silicone composition according to any one of claims 1 to 3, wherein a complex elastic modulus G* at a distortion of 10% under conditions of a thickness of 2.0 mm, a temperature of 120°C, and an angular velocity of 1 rad/s is 10,000 Pa-s or less, and a ratio of a loss elastic modulus G"/ storage elastic modulus G' is 8.0 or less, where these viscoselastic properties are determined in accordance with the methods outlined in the description.

5. The thermal conductive silicone composition according to any one of claims 1 to 4, wherein
when the thermal conductive silicone composition with a thickness of 100 µm is pressurized at 25°C and 0.1 MPa for 60 minutes, the thickness of the pressurized silicone composition is 5 µm or more and 45 µm or less.

## Patentansprüche

1. Wärmeleitende Silikonzusammensetzung, die Folgendes umfasst
(A) ein Organopolysiloxan mit einer kinematischen Viskosität bei 25°C, bestimmt nach dem in der Beschreibung angegebenen Verfahren, von 10 bis 100 000 mm²/s;
(B) ein hydrolysierbares Organopolysiloxan, das eine Alkoxysilylgruppe enthält;
(C) einen wärmeleitenden Füllstoff mit einer durchschnittlichen Teilchengröße von 4 µm oder mehr und 30 µm oder weniger, der ein grobes Teilchen mit einer Teilchengröße von 45 µm oder mehr, bestimmt durch ein Laserbeugungs-Teilchengrößenverteilungsverfahren, in einer Menge von 0,5 Masse-% oder weniger in der gesamten Komponente (C) enthält; und
(D) ein unregelmäßig geformtes Zinkoxidteilchen mit einer durchschnittlichen Teilchengröße von 0,01 µm oder mehr und 2 µm oder weniger, wobei
die Komponente (C) ein unregelmäßig geformtes Zinkoxidteilchen umfasst, das in einer Menge von 40 bis 90 Massenprozent in der gesamten Zusammensetzung enthalten ist,
die Menge des Bestandteils (D) 1 bis 50 Masse-% in der gesamten Zusammensetzung beträgt,
die Wärmeleitfähigkeit der wärmeleitfähigen Silikonzusammensetzung, bestimmt durch ein Heißscheibenverfahren gemäß ISO 22007-2, 2,0 W/m·K oder mehr und weniger als 7,0 W/m·K beträgt und
eine mit einem Spiralviskosimeter bei 25°C und einer Umdrehungszahl von 10 U/min gemessene Viskosität ist von 5 bis 800 Pa·s.

2. Wärmeleitende Silikonzusammensetzung nach Anspruch 1, wobei
die Komponente (A) ein Organopolysiloxan mit einer oder mehreren aliphatischen ungesättigten Kohlenwasserstoffgruppen ist, die an ein Siliziumatom innerhalb eines Moleküls gebunden sind, und
die Zusammensetzung umfasst außerdem:
(E) ein Organowasserstoffpolysiloxan mit zwei oder mehr an ein Siliziumatom gebundenen Wasserstoffatomen innerhalb eines Moleküls;
(F) einen Platinmetall-Katalysator; und
(G) ein Reaktionsinhibitor.

3. Wärmeleitende Silikonzusammensetzung nach Anspruch 1 oder 2 mit einem Kriechstromwiderstand von 350 V oder mehr, bestimmt durch einen Kriechstromwiderstandstest gemäß JIS C 2134.

4. Wärmeleitende Silikonzusammensetzung nach einem der Ansprüche 1 bis 3, wobei ein komplexer Elastizitätsmodul G* bei einer Verformung von 10 % unter Bedingungen einer Dicke von 2,0 mm, einer Temperatur von 120°C und einer Winkelgeschwindigkeit von 1 rad/s 10.000 Pa·s oder weniger beträgt und ein Verhältnis von Verlustelastizitätsmodul G''/Lagerelastizitätsmodul G' 8,0 oder weniger beträgt, wobei diese viskoelastischen Eigenschaften gemäß den in der Beschreibung dargelegten Methoden bestimmt werden.

5. Wärmeleitende Silikonzusammensetzung nach einem der Ansprüche 1 bis 4, wobei
wenn die wärmeleitende Silikonzusammensetzung mit einer Dicke von 100 µm 60 Minuten lang bei 25°C und 0,1 MPa unter Druck gesetzt wird, beträgt die Dicke der unter Druck gesetzten Silikonzusammensetzung 5 µm oder mehr und 45 µm oder weniger.

## Revendications

1. Composition de silicone thermoconductrice comprenant :
(A) un organopolysiloxane ayant une viscosité cinématique à 25 °C déterminée conformément à la méthode décrite dans la description de 10 à 100 000 mm²/s ;
(B) un organopolysiloxane hydrolysable contenant un groupe alcoxysilyle ;
(C) une charge conductrice de chaleur ayant une taille de particule moyenne de 4 µm ou plus et de 30 µm ou moins et contenant une particule grossière d'une taille de particule de 45 µm ou plus déterminée par une méthode de distribution granulométrique par diffraction laser en une quantité de 0,5 % en masse ou moins dans l'ensemble du constituant (C) ; et
(D) une particule d'oxyde de zinc de forme irrégulière ayant une taille moyenne de particule de 0,01 µm ou plus et de 2 µm ou moins, dans laquelle
le constituant (C) comprend une particule d'oxyde de zinc de forme irrégulière qui est contenue en une quantité de 40 à 90 % en masse dans la composition entière,
une quantité du constituant (D) est de 1 à 50 % en masse dans la composition entière,
une conductivité thermique de la composition de silicone thermoconductrice déterminée par une méthode à disque chaud conformément à la norme ISO 22007-2 est de 2,0 W/m·K ou plus et inférieure à 7,0 W/m·K, et
une viscosité mesurée par un viscosimètre à spirale à 25 °C et à un nombre de rotation de 10 tr/min est de 5 à 800 Pa·s.

2. Composition de silicone thermoconductrice selon la revendication 1, dans laquelle
le constituant (A) est un organopolysiloxane ayant un ou plusieurs groupes hydrocarbonés aliphatiques insaturés liés à un atome de silicium au sein d'une molécule, et la composition comprend en outre :
(E) un organohydrogénopolysiloxane ayant deux atomes d'hydrogène ou plus liés à un atome de silicium au sein d'une molécule ;
(F) un catalyseur métallique au platine ; et
(G) un inhibiteur de réaction.

3. Composition de silicone thermoconductrice selon la revendication 1 ou 2, ayant une résistance au cheminement de 350 V ou plus déterminée par un test de résistance au cheminement conformément à la norme JIS C 2134.

4. Composition de silicone thermoconductrice selon l'une quelconque des revendications 1 à 3, dans laquelle un module élastique complexe G* à une distorsion de 10 % dans des conditions d'épaisseur de 2,0 mm, une température de 120 °C et une vitesse angulaire de 1 rad/s est de 10 000 Pa.s ou moins, et un rapport module élastique de perte G"/module élastique de conservation G' est de 8,0 ou moins, où ces propriétés viscosélastiques sont déterminées conformément aux méthodes décrites dans la description.

5. Composition de silicone thermoconductrice selon l'une quelconque des revendications 1 à 4, dans laquelle
lorsque la composition de silicone thermoconductrice d'une épaisseur de 100 µm est mise sous pression à 25 °C et 0,1 MPa pendant 60 minutes, l'épaisseur de la composition de silicone sous pression est de 5 µm ou plus et de 45 µm ou moins.
